# EUROPÄISCHE PATENTSCHRIFT

(11) **EP 1 678 217 B1**
(45) Veröffentlichungstag und Bekanntmachung des Hinweises auf die Patenterteilung: **16.01.2008**
(21) Anmeldenummer: 04765215.1
(22) Anmeldetag: 15.09.2004
(51) Int. Cl.: C08F 20/14, C08F 220/14, C08F 265/06, C08F 4/34, C08F 2/38, B29D 7/00

(54) **HERSTELLUNG VON FARBLOSEN, TRANSPARENT ODER GEDECKT EINGEFÄRBTEN PLEXIGLAS -BLÖCKEN AUS RESTINITIATORFREIEM PRÄPOLYMERISAT DURCH THERMISCHE POLYMERISATION**
PRODUCTION OF COLOURLESS, TRANSPARENT OR OPAQUE COLOURED PLEXIGLAS BLOCKS FROM A PREPOLYMER THAT IS DEVOID OF RESIDUAL INITIATORS BY THERMAL POLYMERISATION
PRODUCTION DE BLOCS DE PLEXIGLAS INCOLORES OU DE COULEUR TRANSPARENTE OU OPAQUE A PARTIR D'UN PREPOLYMERE EXEMPT D' INITIATEURS RESIDUELS PAR POLYMERISATION THERMIQUE

(30) Priorität: 22.10.2003 DE 10349544
(43) Veröffentlichungstag der Anmeldung: 12.07.2006
(73) Patentinhaber: Evonik Röhm GmbH, 64293 Darmstadt (DE)
(72) Erfinder: KABS, Klaus, 64319 Pfungstadt (DE); SCHÄFER, Frank, 64521 Gross-Gerau (DE); JAKOB, Karl-Heinz, 64850 Schaafheim (DE); KLOSSEK, Bernd, 64625 Bensheim (DE)
(86) Internationale Anmeldenummer: PCT/EP2004/010301
(87) Internationale Veröffentlichungsnummer: WO 2005/049666

(56) Entgegenhaltungen:
- EP-A- 0 734 828
- DE-A- 2 941 959
- GB-A- 870 191
- US-A- 4 152 506
- PATENT ABSTRACTS OF JAPAN Bd. 0030, Nr. 79 (C-051), 6. Juli 1979 (1979-07-06) & JP 54 053184 A (SUMITOMO CHEM CO LTD), 26. April 1979 (1979-04-26)

## Beschreibung

### Gebiet der Technik

Die Erfindung betrifft ein neues Guss-Polymerisationsverfahren, mit dem es möglich ist, Polymethacrylat-Blöcke mit einer Dicke bis zu 200 mm und dicker herzustellen.

### Stand der Technik

US-PS 1,942,531 offenbart ein Verfahren zur Polymerisation von Vinylchlorid oder Styrol im Rohrreaktor. Die Polymerisation wird in Gegenwart von ca. 1 % Terpen-ähnlichen Substanzen durchgerührt.

DE 0 632 951 (Dr. Otto Röhm) offenbart ein Verfahren zur Polymerisation von Acrylsäureestern in Gegenwart von Verbindungen aus der Terpenreihe (bis ca. 1 %) zu blasenfreien Produkten.

Mit dem Verfahren lässt sich nicht splitterndes Glas durch Polymerisation einer Monomermischung zwischen Glasscheiben herstellen.

Munzer et al. (Angewandte Makromolekulare Chemie 11 (1970) S. 27 - 40) beschreiben den Einfluss von carbozyclischen Sechsringverbindungen mit zwei nicht konjugierten Doppelbindungen auf die Unterdrückung des Trommsdorff-Effekts.

Terpinolen copolymerisiert mit MMA und führt so zu der Vermeidung des Trommsdorff-Effekts.

DE 29 41 959 offenbart ein Verfahren zur radikalischen Polymerisation von Methacrylsäuremethylester, indem man zuerst ein Präpolymerisat herstellt und dann den Initiator im Präpolymerisat mit Hilfe eines Polymerisationsinhibitors z. B. Thioether zerstört. Mit Hilfe des Sirups werden Platten bis 20 mm Dicke hergestellt.

Platten aus PLEXIGLAS^{®} sind bekannt und werden von der Röhm GmbH & Co. KG in den Handel gebracht. Die Dicken der Platten liegen zwischen 1 mm und 20 mm.

Sind für besondere Anwendungen, z. B. Aquarienbau, dickere Platten erforderlich, so müssen diese dickeren Platten durch Verkleben dünnerer Platten hergestellt werden. Dies stellt einen nicht unerheblichen Aufwand dar. Dickere Platten lassen sich aufgrund der thermischen Probleme bei der Polymerisation nur sehr schwer herstellen. Die Wärmeabfuhr erfordert lange Polymerisationszeiten.

Aber auch die Herstellung von Platten aus PLEXIGLAS^{®} mit bisher handelsüblichen Dicken ist mit Nachteilen behaftet.

Diethermische Polymerisation in einer Kombination aus Wasserbad und Luftpolymerisationsschrank ist aufwendig.

Die notwendige Reaktionszeit ist extrem lang. Bei 100 mm dicken Blöcken werden 30 Tage bei 27° C benötigt.

### Aufgabe

Es bestand also die Aufgabe, ein Polymerisationsverfahren zu entwickeln und Rezepturen zu finden, die es erlauben, Blöcke aus PLEXIGLAS^{®} mit einer Dicke zwischen 30 und ca. 500 mm nach einem wirtschaftlichen Verfahren herzustellen. Die Länge und Breite der Blöcke beträgt ca. 6.000 mm (Länge) und ca. 3.000 mm (Breite).

### Lösung

Es wurde nun gefunden, dass durch Einsatz eines restinitiatorfreien Sirups aus teilweise polymerisiertem Methylmethacrylat folgender Zusammensetzung
a) 10 bis 40 Masse-% Methylmethacrylat
b) 0,0 bis 1,0 Masse-% eines Vernetzers
c) 0,001 bis 0,1 Masse-%, weiterer mit den Verbindungen a) - b) copolymerisierbarer Verbindung (carbocyclische Verbindung)
d) die üblichen Trennmittel in 0,01 bis 1 Masse-%
e) 90 - 60 Masse-% eines Sirups
f) Peroxidicarbonate als Initiator zur Sirupherstellung
sich im thermischen Polymerisationsverfahren dicke Blöcke (ein dicker Block ist ein Block mit mehr als 29 mm Dicke) in bisher nicht gekannten Qualitäten, Ausbeuten und Polymerisationszeiten herstellen ließen.

Als Vernetzer kommen folgende Verbindungen in Frage: Glycoldimethacrylat, Allylmethacrylat, TAC (Triallylcyanurat).

Als copolymerisierbare Verbindungen kommen Terpene und dimeres α-Methylstyrol in Frage.

Der eingesetzte Sirup muss initiatorfrei sein. Unter initiatorfrei wird verstanden, dass die zur Herstellung des Sirups eingesetzten Initiatoren nach Erreichen des gewünschten Polymerisationsgrads thermisch (> 90° C) zerstört werden, so dass sie nicht mehr in der Lage sind, eine Polymerisation zu starten.

Als Initiator werden Peroxidicarbonate verwendet, vorzugsweise Bis(4-tert-Butylcyclohexyl)peroxidicarbonat.

Der vorpolymerisierte Sirup besteht aus einem MMA-Polymer, gelöst in Monomer und wird in seiner Viskosität so eingestellt, dass er in den üblichen Anlagen gehandhabt werden kann, beispielsweise auf 1.200 mPa·s bis 50 mPa·s.

Ferner enthält die erfindungsgemäße Mischung die Polymerisation regelnde carbozyklische Verbindungen mit mindestens einer Doppelbindung, beispielsweise Terpene z. B. γ-Terpinen oder dimere Styrolverbindungen, wie dimeres α-Methylstyrol.

Die Menge an carbozyklischen Verbindungen mit mindestens einer Doppelbindung beträgt zwischen 50 ppm und 300 ppm, bezogen auf die Gesamtmenge des Polymerisationsansatzes, bevorzugt zwischen 80 ppm und 250 ppm und ganz besonders bevorzugt zwischen 100 ppm und 200 ppm. Unter "restinitiatorfrei" wird verstanden, dass sich die Menge der zur Siruppolymerisation eingesetzten Initiatoren unter 0,001 % befindet. Die Menge an carbocyclischer Verbindung beträgt bei Platten mit einer Dicke von 30 mm ca. 100 ppm, bei Platten mit einer Dicke von 100 mm 140 ppm und bei Platten von 200 mm 250 ppm.

Die Restinitiatorrestmenge wird mit < 5 ppm bestimmt. Der Begriff "restinitiatorfrei" bezieht sich auf die zur Polymerisation eingesetzten Initiatoren. Bei der Polymerisation entsteht in einer Nebenreaktion Methacrylsäuremethylesterperoxid (MMA-Peroxid). Dieses MMA-Peroxid ist ein Hochzerfaller (Halbwertzeit > 100° C) und stört die anschließende Polymerisation bei ca. 25° C bis 40° C nicht.

### Beispiele

### Herstellung eines restinitiatorfreien Sirups durch Zulaufpolymerisation

Pro Ansatz werden 760 I MMA benötigt. Zur Polymerisation werden 0,08 % eines Peroxidicarbonats, vorzugsweise Bis(4-tert-Butylcyclohexyl)-peroxidicarbonat, zugegeben. Nach guter Durchmischung wird die Hälfte der Lösung im Kochbehälter vorgelegt. Die zweite Hälfte verbleibt im Zulaufbehälter. Der Kochvorgang wird im Automatikbetrieb gestartet. Dabei wird die Lösung auf 73° C aufgeheizt. Nach Beendigung der Aufheizphase steigt die Temperatur auf 86° C. Bei dieser Temperatur beginnt automatisch der Zulauf der zweiten Hälfte Methylmethacrylat aus dem Zulaufbehälter zwischen 18 und 30 l/min. Die Temperatur soll dabei 93° C nicht überschreiten. Nach beendetem Zulauf wird in den Kühlbehälter abgelassen. Der Polymerisatanteil beträgt je nach Kühlbedingungen 10 - 30 %. Die Viskosität gemessen im 6 mm Ford-Becher beträgt 30 - 60 Sekunden. Die Bestimmung der Viskosität erfolgt analog der DIN 53211.

### Herstellung eines 100 mm Blocks

Nach bekanntem Verfahren wird zwischen zwei Glasscheiben, die mit einer Kunststoffschnur distanziert sind, die zu polymerisierende Lösung gegossen. Die Lösung besteht aus 60 - 90 % restinitiatorfreiem Sirup, 10 - 40 % MMA sowie den üblichen Zusätzen Initiator, Thermo- und UV-Stabilisator, γ-Terpinen (140 ppm) sowie einem Trennmittel. Die Polymerisation erfolgt bei 27° C. Nach etwa 12 Tagen erfolgt die Endpolymerisation im Temperofen. Ohne Sirup, d. h. mit MMA allein beträgt die Polymerisationszeit im Wasserbad etwa 30 Tage. Die Zeit im Temperofen bleibt unverändert.

## Patentansprüche

1. Verfahren zur Herstellung von Kunststofformkörpers mit einer Dicke von 30 - 200 mm durch thermische Polymerisation einer Mischung aus einem restinitiatorfreien Polymethyl(meth)acrylat-Sirup und einer Mischung, bestehend aus MMA und den üblichen Zusatzstoffen und einer olefinischen carbozyklischen Verbindung.

2. Verfahren nach Anspruch 1,
**dadurch gekennzeichnet,**
**dass** der restinitiatorfreie Polymethyl(meth)acrylat-Sirup folgende Eigenschaften aufweist:
- Gehalt an eingesetzten Initiatorperoxiden: unter der Nachweisgrenze (< 5 ppm)
- mittls. Molekulargewicht M_{w} 240.000-350.000
- Zusammensetzung: 70 bis 90 Masse-% Methylmethacrylat,
10 bis 30 Masse-% PMMA
- Viskosität: 30 - 60 Sekunden (Ford-Becher)

3. Verfahren zur Herstellung eines restinitiatorfreien Polymethyl(meth)-acrylat-Sirup,
**dadurch gekennzeichnet,**
**dass** man eine Mischung aus:
- 100 Teile MMA
und
0,05 - 0,1 Teile Peroxidicarbonat
bis zum Umsatz von 10 - 30 % anpolymerisiert.

4. Platten aus PMMA, erhältlich nach einem Verfahren des Anspruchs 1.

5. Verwendung der Platten aus PMMA nach Anspruch 4 zur Herstellung von Aquarien.

6. Verfahren nach Anspruch 1,
**dadurch gekennzeichnet,**
**dass** die carbocyclische Verbindung in Mengen von 50 - 300 ppm, bezogen auf die Menge des Polymerisationseinsatzes, eingesetzt wird.

7. Verfahren nach Anspruch 1,
**dadurch gekennzeichnet,**
**dass** als carbocyclische Verbindungen Terpene eingesetzt werden.

8. Verfahren nach Anspruch 1,
**dadurch gekennzeichnet,**
**dass** als Terpen γ-Terpinen eingesetzt werden.

## Claims

1. Process for producing plastics moldings with a thickness of 30-200 mm by thermal polymerization of a mixture of a residual initiator-free polymethyl (meth)acrylate syrup and a mixture consisting of MMA and the customary additives and an olefinic carbocyclic compound.

2. Process according to Claim 1,
**characterized in that**
the residual initiator-free polymethyl (meth)-acrylate syrup has the following properties:
- content of initiator peroxides used: below the detection limit (< 5 ppm)
- average molecular weight M_{w} 240 000-350 000
- composition: from 70 to 90% by mass of methyl methacrylate,
from 10 to 30% by mass of PMMA
- viscosity: 30-60 seconds (Ford cup).

3. Process for preparing a residual initiator-free polymethyl (meth)acrylate syrup,
**characterized in that**
a mixture of:
- 100 parts of MMA
and
0.05-0.1 part of peroxydicarbonate
is incipiently polymerized up to conversion of 10-30%.

4. Sheets of PMMA obtainable by a process of Claim 1.

5. Use of the sheets of PMMA according to Claim 4 for producing aquaria.

6. Process according to Claim 1,
**characterized in that**
the carbocyclic compound is used in amounts of 50-300 ppm based on the amount of the polymerization batch.

7. Process according to Claim 1,
**characterized in that**
the carbocyclic compounds used are terpenes.

8. Process according to Claim 1,
**characterized in that**
the terpene used is γ-terpinene.

## Revendications

1. Procédé de production d'un corps moulé en matériau synthétique présentant une épaisseur de 30-200 mm par polymérisation thermique d'un mélange d'un sirop de poly((méth)acrylate de méthyle) exempt d'initiateurs résiduels et d'un mélange constitué de MMA et d'additifs usuels et d'un composé carbocyclique oléfinique.

2. Procédé selon la revendication 1, **caractérisé en ce que** le sirop de poly((méth)acrylate de méthyle) exempt d'initiateurs résiduels présente les propriétés suivantes :
- Teneur en initiateurs de type peroxyde utilisée : sous la limite de détection (< 5 ppm)
- Poids moléculaire moyen M_{w} 240 000-350 000
- Composition : 70 à 90% en masse de méthacrylate de méthyle,
10 à 30% en masse de PMMA,
- Viscosité : 30 - 60 secondes (Bécher de Ford).

3. Procédé pour la préparation d'un sirop de poly((méth)acrylate de méthyle) exempt d'initiateurs résiduels, **caractérisé en ce qu'**on polymérise un mélange de :
- 100 parties de MMA
et
0,05-0,1 partie de peroxydicarbonate
jusqu'à une transformation de 10-30%.

4. Plaques en PMMA, pouvant être obtenues selon un procédé selon la revendication 1.

5. Utilisation des plaques en PMMA selon la revendication 4 pour la préparation d'aquariums.

6. Procédé selon la revendication 1, **caractérisé en ce que** le composé carbocyclique est utilisé en des quantités de 50-300 ppm, par rapport à la quantité de charge de polymérisation.

7. Procédé selon la revendication 1, **caractérisé en ce qu'**on utilise des terpènes comme composés carbocycliques.

8. Procédé selon la revendication 1, **caractérisé en ce qu'**on utilise comme terpène des γ-terpinènes.
